(19)

Europäisches
Patentamt
European
Patent Office
Office européen
des brevets

(11) **EP 4 369 207 A1**

(12) **EUROPEAN PATENT APPLICATION**
published in accordance with Art. 153(4) EPC

(43) Date of publication:
**15.05.2024 Bulletin 2024/20**

(21) Application number: **22851950.0**

(22) Date of filing: **25.07.2022**

(51) International Patent Classification (IPC):
**G06F 12/08** [(2016.01)]

(52) Cooperative Patent Classification (CPC):
**G06F 8/41; G06F 8/71; G06F 12/08; G06F 16/2455**

(86) International application number:
**PCT/CN2022/107678**

(87) International publication number:
**WO 2023/011236 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2021 CN 202110876986**

(71) Applicant: **Huawei Technologies Co., Ltd.
Longgang
Shenzhen, Guangdong 518129 (CN)**

(72) Inventors:
• **HUANG, Xiaoquan
  Shenzhen, Guangdong 518129 (CN)**
• **MA, Mingze
  Shenzhen, Guangdong 518129 (CN)**
• **LE, Yongnian
  Shenzhen, Guangdong 518129 (CN)**

(74) Representative: **Huawei European IPR
Huawei Technologies Duesseldorf GmbH
Riesstraße 25
80992 München (DE)**

(54) **COMPILATION OPTIMIZATION METHOD FOR PROGRAM SOURCE CODE, AND RELATED PRODUCT**

(57)    This application provides a compilation optimization method for program source code and a related product. The method includes: running a first executable file, and collecting a hardware cache event, where the first executable file includes an executable program and debugging information, the executable program is obtained by compiling program source code, and the debugging information includes a correspondence between the program source code and an executable instruction in the executable program; then, obtaining first configuration information based on the hardware cache event and the debugging information, where the first configuration information includes an identifier of the program source code and a quantity of cache misses corresponding to the identifier; and finally, compiling the program source code based on the first configuration information to obtain a second executable file. When the second executable file is executed, a cache optimization effect can be improved and cache optimization costs can be reduced.

```
┌─────────────────────────────────────────────┐
│        Acquire a first executable file        │──── S101
└─────────────────────────────────────────────┘
                      │
                      ▼
┌─────────────────────────────────────────────┐
│ Run the first executable file, and collect a  │──── S102
│            hardware cache event               │
└─────────────────────────────────────────────┘
                      │
                      ▼
┌─────────────────────────────────────────────┐
│ Obtain first configuration information based   │──── S103
│ on the hardware cache event and debugging      │
│ information                                     │
└─────────────────────────────────────────────┘
                      │
                      ▼
┌─────────────────────────────────────────────┐
│ Compile program source code based on the first │──── S104
│ configuration information to obtain a second    │
│ executable file                                 │
└─────────────────────────────────────────────┘
```

FIG. 3

**Description**

This application claims priority to Chinese Patent Application No. 202110876986.9, filed with the China National Intellectual Property Administration on July 31, 2021 and entitled "COMPILATION OPTIMIZATION METHOD FOR PROGRAM SOURCE CODE AND RELATED PRODUCT", which is incorporated herein by reference in its entirety.

**TECHNICAL FIELD**

This application relates to the field of cache technologies, and in particular, to a compilation optimization method for program source code and a related product.

**BACKGROUND**

With rapid development of cache technologies, a speed of fetching an object (including data and an instruction) by a central processing unit (central processing unit, CPU) keeps increasing. A key factor that affects the speed of fetching an object by the CPU is whether an object that is to be accessed by the CPU is stored in a cache. Therefore, the cache needs to be optimized to enable the CPU to read more to-be-accessed objects from the cache, to reduce a quantity of times that the CPU accesses memory, so that the speed of fetching an object by the CPU is improved.

However, all current cache optimization methods have a problem of high optimization costs but low accuracy and timeliness. To be specific, a cache can be optimized only by using these cache optimization methods at high costs, and an optimized cache may further include a large quantity of redundant objects and an object that is not frequently accessed, or before a CPU fetches an object, the object is not transferred from memory to a cache in time.

Therefore, how to reduce optimization costs of cache optimization while improving a cache optimization effect is an urgent problem to be resolved in the field of current cache technologies.

**SUMMARY**

This application provides a compilation optimization method and apparatus for program source code, a device, and a computer-readable storage medium, to improve accuracy and timeliness of cache optimization.

According to a first aspect, this application provides a compilation optimization method for program source code. The method includes: running a first executable file, and collecting a hardware cache event, where the first executable file includes an executable program and debugging information, the executable program is obtained by compiling program source code, and the debugging information includes a correspondence between the program source code and an executable instruction in the executable program; then, obtaining first configuration information based on the hardware cache event and the debugging information, where the first configuration information includes an identifier of the program source code and a quantity of cache misses corresponding to the identifier; and finally, compiling the program source code based on the first configuration information to obtain a second executable file.

According to the method described in the first aspect, the second executable file may be obtained, and when a CPU executes the second executable file, an objective of optimizing a cache can be achieved. In addition, in the method, a quantity of cache misses corresponding to the program source code is determined by collecting the hardware cache event, and then the program source code is compiled with reference to the quantity of cache misses corresponding to the program source code, so that the second executable file obtained through compilation can notify more accurately and in a more timely manner the CPU of how to optimize a cache, so that accuracy and timeliness of cache optimization can be improved, and cache optimization costs can be reduced.

In a possible implementation, the obtaining first configuration information based on the hardware cache event and the debugging information includes: parsing the hardware cache event to obtain a quantity of cache misses corresponding to the executable instruction; and then determining, based on the quantity of cache misses corresponding to the executable instruction and the debugging information, a quantity of cache misses corresponding to source code associated with the executable instruction to obtain the first configuration information.

Because the CPU can execute an executable instruction, executable instructions that encounter a cache miss when being executed by the CPU may be determined, to determine the quantity of cache misses corresponding to the executable instruction. In addition, because the executable instruction is obtained by compiling the program source code, the quantity of cache misses corresponding to the program source code may be determined based on the quantity of cache misses corresponding to the executable instruction. In other words, the quantity of cache misses corresponding to the program source code may be determined more conveniently and accurately in the foregoing implementation, to guide compilation of the program source code, so that a compilation effect of the program source code is better.

In a possible implementation, the compiling the program source code based on the first configuration information to obtain a second executable file includes: parsing the first configuration information, and determining source code that is in the program source code and that meets a first condition, where the first condition includes: a quantity of cache misses of the source code is greater than a first threshold, and the source code includes a fetch object; and then calculating a prefetch distance of the source code that meets the first condition, where the prefetch distance indicates an advance of moving the fetch object from memory to a cache; and finally generating a prefetch instruction based on the prefetch distance.

In the foregoing implementation, the source code that meets the first condition is selected, and data prefetch is performed on the source code that meets the first condition, so that a workload of the CPU can be reduced, and a cache optimization effect can be improved on the whole.

In a possible implementation, the calculating a prefetch distance of the source code that meets the first condition includes: acquiring a control flow graph (control flow graph, CFG) of a first loop, where the first loop is an innermost loop including the source code that meets the first condition, the CFG of the first loop includes a plurality of basic blocks (basic block, BBs) and a plurality of directed edges, and the plurality of directed edges are used for indicating an execution order of the plurality of BBs; then determining an execution probability of each directed edge; calculating a single loop time value of the first loop based on the execution probability of each directed edge; and then calculating, based on the single loop time value of the first loop, the prefetch distance of the source code that meets the first condition.

In the foregoing implementation, it is considered that a cache miss event is most likely to occur when the CPU executes a loop program, especially a program of an innermost loop nested in a loop. Therefore, the prefetch distance can be determined more accurately by calculating the single loop time value of the innermost loop, to improve timeliness and universality of cache optimization. In addition, the execution probability of each directed edge is determined, to calculate the single loop time value of the first loop. This can reduce impact of a BB with a low execution probability in the first loop on the single loop time value of the first loop, to improve accuracy of the calculated single loop time value of the first loop.

In a possible implementation, the acquiring a CFG of a first loop includes: parsing the first configuration information, and determining a function that is in the program source code and that meets a second condition, where the second condition is that a quantity of cache misses of the function is greater than a second threshold, and the quantity of cache misses of the function is a sum of quantities of cache misses of source code included in the function; then determining a first loop in the function that meets the second condition, where the first loop is an innermost loop in the function that meets the second condition, and an iterative execution probability of the first loop is greater than a third threshold; and subsequently, constructing the CFG of the first loop.

In the foregoing implementation, the first loop is further determined by determining the function that meets the second condition. In this way, efficiency of determining the first loop can be improved, to reduce time of compiling the program source code, and reduce costs of compiling the program source code.

In a possible implementation, the calculating a single loop time value of the first loop based on the execution probability of each directed edge includes: determining a BB and a directed edge that are unrelated to a loop layer of the first loop; pruning the unrelated BB and directed edge to obtain a second loop; and then calculating execution probabilities of BBs in the second loop based on the execution probability of each directed edge to obtain the single loop time value of the first loop, where the single loop time value of the first loop is a sum of products of the execution probabilities of the BBs and execution time values of the BBs.

In the foregoing implementation, the BB and the directed edge that are in the first loop and that are unrelated to the loop layer are pruned to obtain the second loop, and then the single loop time value of the first loop is calculated based on the second loop. In this way, accuracy of the calculated single loop time value of the first loop can be improved.

In a possible implementation, before the compiling the program source code based on the first configuration information to obtain a second executable file, the method further includes: acquiring a plurality of structures and members in the plurality of structures in the program source code; and the compiling the program source code based on the first configuration information to obtain a second executable file includes: parsing the first configuration information, and determining a structure in the plurality of structures that meets a third condition, where the third condition includes: members in the structure do not have sequential dependency in use, and a quantity of cache misses of the structure is greater than a fourth threshold; adjusting an order of the members in the structure that meets the third condition to obtain a new structure; and subsequently, replacing the structure that meets the third condition with the new structure.

In the foregoing implementation, the structure in the program source code can be further optimized, to improve cache usage. In addition, in this manner, a quantity of cache misses of a structure in the program source code is determined by collecting a hardware cache event, to improve accuracy of rearrangement of members of the structure.

In a possible implementation, each structure includes source code in the program source code, and the parsing the first configuration information, and determining a structure that meets a third condition includes: parsing the first configuration information, and determining the identifier of the program source code and the quantity of cache misses corresponding to the identifier; and obtaining a quantity of cache misses of each structure based on the identifier of the program source code and the quantity of cache misses corresponding to the identifier to determine the structure that meets the third condition. In this way, time for rearranging members of a structure on the program source code can be reduced, and costs for rearranging members of a structure on the program source code can be reduced. In addition, structures are filtered based on the third condition. This can further improve accuracy of rearranging members of a structure on the program source code.

In a possible implementation, the adjusting an order of the members in the structure that meets the third condition includes: acquiring quantities of cache misses of a plurality of members in the structure that meets the third condition; and then adjusting an order of the plurality of members based on the quantities of cache misses of the plurality of members. In this way, cache utilization can be further improved .

In a possible implementation, the adjusting an order of the plurality of members based on the quantities of cache misses of the plurality of members includes: acquiring a size of each member in the plurality of members; and then adjusting the order of the plurality of members based on the size of each member and the quantity of cache misses of each member. In this way, cache utilization can be further improved.

According to a second aspect, this application provides a compilation optimization apparatus for program source code. The apparatus includes a running unit, an event collection unit, a parsing unit, and a compilation unit. The running unit is configured to run a first executable file, where the first executable file includes an executable program and debugging information, the executable program is obtained by compiling program source code, and the debugging information includes a correspondence between the program source code and an executable instruction in the executable program. The event collection unit is configured to collect a hardware cache event. The parsing unit is configured to obtain first configuration information based on the hardware cache event and the debugging information, where the first configuration information includes an identifier of the program source code and a quantity of cache misses corresponding to the identifier. The compilation unit is configured to compile the program source code based on the first configuration information to obtain a second executable file.

In a possible implementation, the parsing unit is further configured to: parse the hardware cache event to obtain a quantity of cache misses corresponding to the executable instruction; and then determine, based on the quantity of cache misses corresponding to the executable instruction and the debugging information, a quantity of cache misses corresponding to source code associated with the executable instruction to obtain the first configuration information.

In a possible implementation, the compilation unit is further configured to: parse the first configuration information, and determine source code that is in the program source code and that meets a first condition, where the first condition includes: a quantity of cache misses of the source code is greater than a first threshold, and the source code includes a fetch object; then calculate a prefetch distance of the source code that meets the first condition, where the prefetch distance indicates an advance of moving the fetch object from memory to a cache; and finally generate a prefetch instruction based on the prefetch distance.

In a possible implementation, the compilation unit is further configured to: acquire a CFG of a first loop, where the first loop is an innermost loop including the source code that meets the first condition, the CFG of the first loop includes a plurality of basic blocks BBs and a plurality of directed edges, and the plurality of directed edges are used for indicating an execution order of the plurality of BBs; then determine an execution probability of each directed edge; calculate a single loop time value of the first loop based on the execution probability of each directed edge; and then calculate, based on the single loop time value of the first loop, the prefetch distance of the source code that meets the first condition.

In a possible implementation, the compilation unit is further configured to: parse the first configuration information, and determine a function that is in the program source code and that meets a second condition, where the second condition is that a quantity of cache misses of the function is greater than a second threshold, and the quantity of cache misses of the function is a sum of quantities of cache misses of source code included in the function; then determine a first loop in the function that meets the second condition, where the first loop is an innermost loop in the function that meets the second condition, and an iterative execution probability of the first loop is greater than a third threshold; and subsequently, construct the CFG of the first loop.

In a possible implementation, the compilation unit is further configured to: determine a BB and a directed edge that are unrelated to a loop layer of the first loop, and prune the unrelated BB and directed edge to obtain a second loop; and then calculate execution probabilities of BBs in the second loop based on the execution probability of each directed edge to obtain the single loop time value of the first loop, where the single loop time value of the first loop is a sum of products of the execution probabilities of the BBs and execution time values of the BBs.

In a possible implementation, the compilation unit is further configured to acquire a plurality of structures and members in the plurality of structures in the program source code. The compilation unit is further configured to: parse the first configuration information, and determine a structure in the plurality of structures that meets a third condition, where the third condition includes: members in the structure do not have sequential dependency in use, and a quantity of cache misses of the structure is greater than a fourth threshold; adjust an order of the members in the structure that meets the third condition to obtain a new structure; and subsequently, replace the structure that meets the third condition with the new structure.

In a possible implementation, each structure includes source code in the program source code, and the compilation unit is further configured to: parse the first configuration information, and determine the identifier of the program source code and the quantity of cache misses corresponding to the identifier; and obtain a quantity of cache misses of each structure based on the identifier of the program source code and the quantity of cache misses corresponding to the identifier to determine the structure that meets the third condition.

In a possible implementation, the compilation unit is further configured to: acquire quantities of cache misses of a plurality of members in the structure that meets the third condition; and then adjust an order of the plurality of members based on the quantities of cache misses of the plurality of members.

In a possible implementation, the compilation unit is further configured to: acquire a size of each member in the plurality of members; and then adjust the order of the plurality of members based on the size of each member and the quantity of cache misses of each member.

According to a third aspect, this application provides a computing device. The computing device includes a processor and a memory. The memory stores computer instructions. The processor executes the computer instructions, to enable the computing device to perform the method provided in any one of the first aspect or the possible implementations of the first aspect.

According to a fourth aspect, this application provides a computer-readable storage medium. The computer-readable storage medium stores computer instructions. When the computer instructions are executed by a computing device, the computing device performs the method provided in any one of the first aspect or the possible implementations of the first aspect.

**BRIEF DESCRIPTION OF DRAWINGS**

FIG. 1 is a schematic diagram of a memory access process according to this application;
FIG. 2 is a schematic diagram of a structure of a compilation optimization apparatus according to this application;
FIG. 3 is a schematic flowchart of a compilation optimization method for program source code according to this application;
FIG. 4 is a schematic flowchart of performing a compilation operation of data prefetch on program source code according to this application;
FIG. 5 shows a CFG of a loop 1 according to this application;
FIG. 6 is a CFG of a loop obtained after a loop 1 is pruned according to this application;
FIG. 7 is a schematic flowchart of a compilation operation of rearranging members of a structure on program source code according to this application;
FIG. 8 is a schematic diagram of a structure of a second structure according to this application;
FIG. 9 is a schematic diagram of a storage arrangement of a second structure according to this application;
FIG. 10 is a schematic diagram of a structure of a third structure according to this application;
FIG. 11 is a schematic diagram of a storage arrangement of a third structure according to this application;
FIG. 12 is a schematic diagram of a structure of another third structure according to this application;
FIG. 13 is a schematic diagram of a storage arrangement of another third structure according to this application; and
FIG. 14 is a schematic diagram of a structure of a computing device according to this application.

**DESCRIPTION OF EMBODIMENTS**

For ease of understanding the technical solutions provided in this application, before the technical solutions provided in this application are described in detail, some terms in this application are first described.

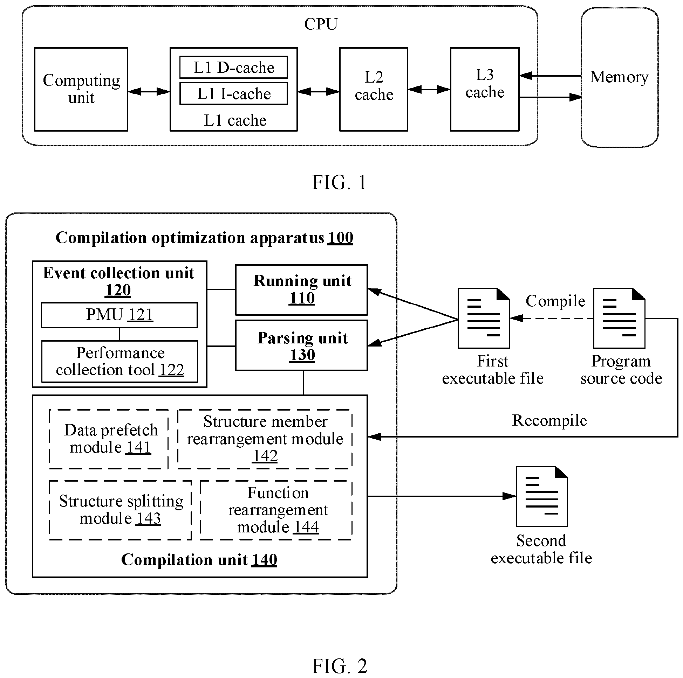

A cache (cache) is a temporary memory that performs high-speed data exchange between a CPU and memory. The cache has a smaller capacity than the memory. However, access speed of objects (including data and an instruction) of the cache is faster than that of the memory. Multi-level caches, for example, a level-1 cache (L1 cache), a level-2 cache (L2 cache), and a level-3 cache (L3 cache) shown in FIG. 1, are usually disposed between the CPU and the memory. According to cached objects, the level-1 cache may be further classified into a data cache (data cache) and an instruction cache (instruction cache). As the name implies, the data cache is used for caching data, and the instruction cache is used for caching an instruction. In this case, the CPU needs to access the memory through the foregoing multi-level caches. For example, an object accessed by the CPU is data. The CPU first accesses the level-1 cache (specifically, a data cache), and if to-be-accessed data is in the level-1 cache, the CPU reads the data from the level-1 cache. If the to-be-accessed data is not in the level-1 cache, the level-2 cache is accessed. If the to-be-accessed data is in the level-2 cache, the data is read from the level-2 cache. If the to-be-accessed data is not in the level-2 cache, the level-3 cache is accessed. If the to-be-accessed data is in the level-3 cache, the data is read from the level-3 cache. If the to-be-accessed data is not in the level-3 cache, the CPU accesses the data from the memory. It should be understood that a process of accessing an instruction by the CPU is similar to the foregoing data access process, and therefore details are not described herein again.

There are two cases in the foregoing process. In one case, an object accessed by the CPU is in the cache, that is, the CPU may read the to-be-accessed object from the level-1 cache, the level-2 cache, or the level-3 cache. This case is referred to as a cache hit (cache hit). In the other case, if an object accessed by the CPU is not in the cache, that is, the CPU fails to read the to-be-accessed object from the level-1 cache, the level-2 cache, and the level-3 cache. This case is referred to as a cache miss (cache miss).

Because the access of the memory is latency-sensitive, when an object accessed by the CPU is not in the cache, the CPU needs to wait for a long time before accessing the data or the instructions. As a result, a bottleneck occurs in a program execution process. Therefore, a plurality of cache optimization methods have appeared, including, but not limited to, the following:

1. Data prefetch

Data prefetch means that before accessing data in memory, a CPU transmits to-be-accessed data from the memory to a cache in advance. Data prefetch modes include hardware prefetch and software prefetch. The hardware prefetch means that the CPU transmits, in advance based on historical information of memory access, data that may be accessed in the future to the cache. The software prefetch means that a compiler inserts a prefetch instruction into a program in a process of compiling program source code, so that when the program is run, data that may be accessed may be transmitted to a cache in advance based on the prefetch instruction.

It should be noted that an effective data prefetch mechanism is to transmit memory data from the memory to the cache just before the CPU uses the memory data, so that the CPU can access the data from the cache, to reduce latency of memory access. In other words, data prefetch cannot be too early or too late. Cache removal and cache pollution can be minimized only when data is moved from the memory to the cache in time in a specific time window, to keep overheads of data prefetch from exceeding the benefit of data prefetch.

2. Structure optimization

A structure (struct) is a data structure, for example, an integer, a floating point, or the like. The structure includes one or more structure members (member). Different structure members can belong to different types. For example, a structure S includes integer data a, a character variable b, and a double-precision variable c. The data a, the variable b, and the variable c are all structure members in the structure S.

Structure optimization methods mainly include structure member rearrangement and structure splitting. The structure member rearrangement is adjusting a sequence of members in a structure, so that members that are frequently accessed in the structure are located in a same cache line (cache line) as much as possible, to improve cache line utilization and achieve an objective of cache optimization. The cache line is a unit block forming the cache, and each cache line includes one or more consecutive memory storage units. Structure splitting is splitting one structure into a plurality of structures based on access frequencies of members in the structure, to improve utilization of a cache line and achieve an objective of cache optimization.

3. Function rearrangement

Function rearrangement means that code in a function or between different functions is rearranged, so that functions with a close call relationship are arranged adjacently, to improve utilization of a cache line, reduce instruction transfer waiting caused by a cache miss of an instruction, and improve program running efficiency.

It is not difficult to see that the foregoing cache optimization methods all involve the following problem: How to accurately determine which objects (data or an instruction) in memory may be frequently accessed by a CPU? After objects that are to be frequently accessed by the CPU are determined, how to calculate an appropriate optimization policy based on these objects to optimize a cache? Currently, cache optimization is mainly implemented based on an instrumentation technology. To be specific, instrumentation tracking is performed on an operation instruction (for example, a load operand or a store operand) of a CPU fetch object, to determine objects that the CPU needs to read from the memory, to perform a corresponding optimization operation, for example, a data prefetch operation, on these objects in a compilation phase. However, the method can be implemented only through software instrumentation, which increases cache optimization overheads. In addition, the method further has a problem of low accuracy and timeliness. That is, after the cache is optimized by using the foregoing method, before the CPU fetches an object, the object is not transferred from the memory to the cache in time.

To resolve the foregoing problem, this application provides a compilation optimization method for program source code. After the program source code is compiled by using the method, a corresponding executable file may be obtained. When a CPU executes the executable file, cache optimization can be implemented, and cache optimization overheads can be reduced, so that accuracy and timeliness of cache optimization can be improved.

A method for compiling program source code provided in this application may be executed by a compilation optimization apparatus. FIG. 2 is a schematic diagram of a structure of the compilation optimization apparatus. As shown in FIG. 2, a compilation optimization apparatus 100 includes a running unit 110, an event collection unit 120, a parsing unit 130, and a compilation unit 140. The following briefly describes the foregoing units.

(1) Running unit 110

The running unit 110 is configured to: acquire a first executable file, and run the first executable file. The first executable file includes an executable program and debugging information, the executable program is obtained by compiling program source code, and the debugging information includes a correspondence between the program source code and an executable instruction in the executable program.

(2) Event collection unit 120

The event collection unit 120 is configured to collect a hardware cache event when the first executable file is run. The hardware cache event is status data when a CPU accesses a cache. It should be understood that two cases may occur when the CPU accesses the cache: a cache hit and a cache miss. Therefore, the hardware cache event may include a cache hit event and a cache miss event. The cache hit event is an event that the CPU acquires an access object from the cache when accessing the cache. The cache miss event is an event that the CPU does not acquire an access object from the cache when accessing the cache.

In this embodiment of this application, considering that a performance monitoring unit (performance monitoring unit, PMU) is commonly used in a current CPU, the PMU is configured to monitor execution status events (that is, hardware events) of a plurality of types of hardware in the CPU, and the hardware event in the CPU includes the foregoing hardware cache event. Therefore, the event collection unit 120 may include a PMU 121 and a performance collection tool 122. The PMU 121 is configured to monitor a hardware event on the CPU, and the performance collection tool 122 is configured to sample and record a hardware cache event on the PMU 121. Optionally, the performance collection tool 122 may be a performance collection tool (for example, perf and OProfile) provided by Linux, a performance collection tool (for example, perfmon and VTune) provided by Windows, or the like, which is not specifically limited herein.

Optionally, the PMU 121 is configured, so that the PMU 121 monitors only a hardware cache event on the CPU. In this way, work of the PMU 121 can be reduced.

The event collection unit 120 is further configured to send the collected hardware cache event to the parsing unit 130.

(3) Parsing unit 130

The parsing unit 130 is configured to: acquire the first executable file, and receive the hardware cache event sent by the event collection unit 120. The parsing unit 130 is further configured to: parse the first executable file to obtain debugging information, and then obtain first configuration information based on the debugging information and the hardware cache event. The first configuration information includes an identifier of the program source code and a quantity of cache misses corresponding to the identifier. The parsing unit 130 is further configured to send the first configuration information to the compilation unit 140.

(4) Compilation unit 140

The compilation unit 140 is configured to: acquire the program source code, receive the first configuration information sent by the parsing unit 130, and compile the program source code based on the first configuration information to obtain a second executable file.

In a specific embodiment, the compilation unit 140 includes a data prefetch module 141. The data prefetch module 141 is configured to perform a compilation operation of data prefetch on the program source code based on the first configuration information. Specifically, the data prefetch module 141 parses the first configuration information, and determines source code that is in the program source code and that meets a condition A, where the condition A includes: a quantity of cache misses of the source code is greater than a threshold A, and the source code includes a fetch object of the CPU. Then, the data prefetch module 141 calculates a prefetch distance of the source code that meets the condition A, and generates a prefetch instruction based on the prefetch distance, so that the CPU can read a required fetch object from the cache when executing the executable instruction corresponding to the source code.

In a specific embodiment, the compilation unit 140 further includes a structure member rearrangement module 142. The structure member rearrangement module 142 is configured to perform a compilation operation of structure member rearrangement on the program source code based on the first configuration information. Specifically, the structure member rearrangement module 142 acquires all structures in the program source code and members in each structure, and then determines, by parsing the foregoing first configuration information, a structure that meets a condition B, where the condition B includes: members in the structure do not have a sequential dependency in use, a quantity of cache misses of the structure is greater than a threshold B, and that the members in the structure do not have a sequential dependency in use means that the members in the structure are not obtained based on a structure pointer and an offset. Then, the order of the members in the structure that meets the condition B is adjusted to obtain a new structure, and the new structure is used to replace the original structure (that is, the structure that meets the condition B).

Optionally, the compilation unit 140 may further include a structure splitting module 143 or a function rearrangement module 144. The structure splitting module 143 is configured to split, based on the first configuration information, a structure in which a cache miss event frequently occurs in the program source code. The function rearrangement module 144 is configured to perform, based on the first configuration information, a compilation operation of function rearrangement on a function that is in the program source code and in which a cache miss event frequently occurs.

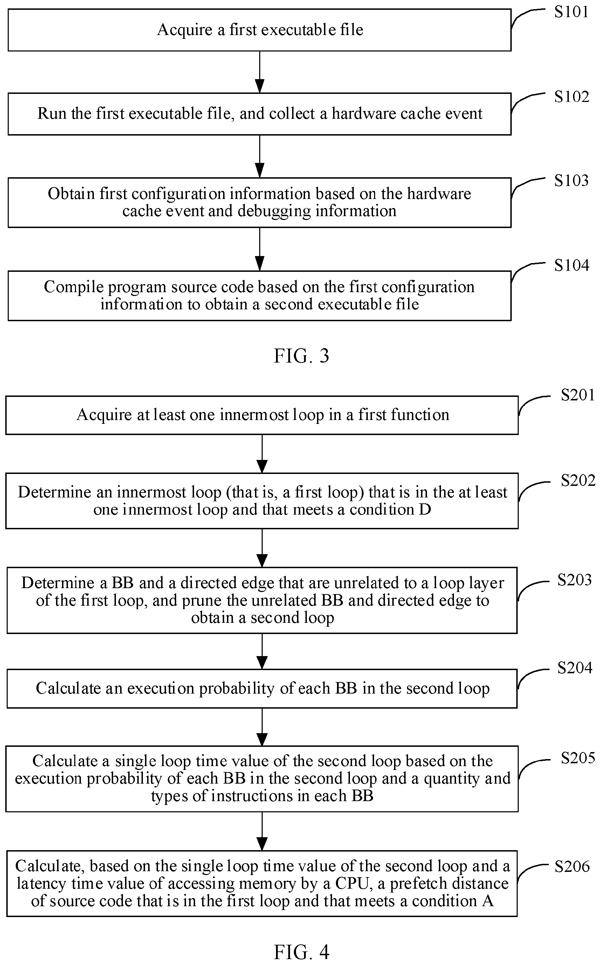

Refer to FIG. 3. The following describes in more detail a specific process in which the compilation optimization apparatus 100 performs compilation optimization on the program source code. FIG. 3 is a schematic flowchart of a compilation optimization method for program source code according to this application. The method includes, but is not limited to, the following steps.

S101: Acquire a first executable file.

The first executable file is a file that is obtained by compiling program source code and that can be loaded and executed by a CPU. The program source code is an uncompiled text file written according to a specific program design language (for example, a C language or a C++ language) specification, and is a series of human-readable computer language instructions. Optionally, the first executable file may be a binary executable file (binary executable), and the executable instruction may be an assembly instruction, a machine instruction, or the like.

In this embodiment of this application, the first executable file includes an executable program and debugging information. The executable program is a program that can be loaded and executed by the CPU. The executable program includes an executable instruction. The executable instruction is an instruction that can be loaded and executed by the CPU. The debugging information is generated in the foregoing process in which a compiler compiles the program source code, and indicates a relationship between the program source code and an executable program. The debugging information includes a correspondence between the program source code and an executable instruction in the executable program.

During actual application, considering a habit of writing program source code, the program source code may be considered as being formed by a plurality of lines of source code, and one executable instruction usually corresponds to one or more lines of source code after compilation. Therefore, the correspondence between the program source code included in the debugging information and the executable instruction in the executable program may be specifically a correspondence between an identifier of each line of source code and an identifier of each executable instruction. The identifier of each row of source code may be a sequence number of the row of source code, and the identifier of each executable instruction may be a sequence number of the executable instruction. Optionally, the identifier of each row of source code may be a storage address of the row of source code, and the identifier of each executable instruction may be a storage address of the executable instruction.

S102: Run the first executable file, and collect a hardware cache event.

In some embodiments, in a process of running the first executable file, the compilation optimization apparatus 100 monitors a hardware event that occurs, and samples and records a hardware cache event in the hardware event. For a detailed description of the hardware event and the hardware cache event, refer to the related description of the event collection unit 120 in the foregoing content. For brevity, details are not described herein again.

It should be understood that, because the hardware event not only includes the hardware cache event, in some other embodiments, in a process of running the first executable file, the compilation optimization apparatus 100 may monitor only the hardware cache event on the CPU, and sample and record the detected hardware cache event.

S103 : Obtain first configuration information based on the hardware cache event and the debugging information.

The first configuration information includes an identifier of the program source code and a quantity of cache misses corresponding to the identifier. The identifier of the program source code may be identifiers of all source code in the program source code (for example, an identifier of each line of source code in the program source code), or may be identifiers of some source code in the program source code. This is not specifically limited herein.

In a specific embodiment, that the compilation optimization apparatus 100 obtains the first configuration information based on the hardware cache event and the debugging information includes: parsing the first executable file to obtain the debugging information; then parsing the hardware cache event to obtain a quantity of cache misses corresponding to the executable instruction in the executable program, where the quantity of cache misses corresponding to the executable instruction is a quantity of cache miss events that occur when the CPU executes the executable instruction;

and subsequently, determining, based on the quantity of cache misses corresponding to the executable instruction and the debugging information, a quantity of cache misses corresponding to source code associated with the executable instruction to obtain the first configuration information.

It should be noted that the first configuration information indicates the compiler to compile the program source code. Therefore, after obtaining the first configuration information, the compilation optimization apparatus 100 further needs to store the first configuration information as a file in a format that can be parsed by the compiler. For example, a used compiler is a GCC compiler, and the GCC compiler can read and parse a file in a .gcov format. In this case, after obtaining the first configuration information, the compilation optimization apparatus 100 stores the first configuration information as a file in the .gcov format, so that the GCC compiler can read the first configuration information and parse the first configuration information.

S104: Compile the program source code based on the first configuration information to obtain a second executable file.

Similar to the first executable file, the second executable file is also a file that can be loaded and run by the CPU. However, the second executable file is different from the first executable file. Compared with the first executable file, when the CPU executes the second executable file, a cache optimization effect is better, so that shorter time is consumed for accessing the memory, and program running efficiency is higher.

In this embodiment of this application, after obtaining the first configuration information, the compilation optimization apparatus 100 may compile the program source code based on the first configuration information in any one of the following manners:

Manner 1: The compilation optimization apparatus 100 performs a compilation operation of data prefetch on the program source code based on the first configuration information.

Specifically, the compilation optimization apparatus 100 parses the first configuration information, and determines source code that is in the program source code and that meets the condition A; then calculates a prefetch distance of the source code that meets the condition A, where the prefetch distance indicates an advance of moving the fetch object of the CPU from memory to the cache; and finally, generates a prefetch instruction based on the prefetch distance, so that the CPU can read a corresponding fetch object from the cache when executing the executable instruction corresponding to the source code that meets the condition A.

In a specific embodiment, the compilation optimization apparatus 100 determines, in the program source code, the source code that meets the condition A in various manners, for example:

(1). The first configuration information is parsed to obtain an identifier of the program source code and a quantity of cache misses corresponding to the identifier, to obtain quantities of cache misses of a plurality of functions in the program source code, where a quantity of cache misses of each function is equal to a sum of quantities of cache misses corresponding to source code included in the function. Then, the plurality of functions are sorted in descending order based on the quantity of cache misses, and at least one function that meets a condition C is selected (for brevity, the function that meets the condition C is referred to as a first function for short below). The condition C includes at least one of the following: the quantity of cache misses of the function is greater than a threshold C, and a ranking of the function is less than a threshold D. Then, the source code of the fetch object of the CPU in each first function is determined, and the quantity of cache misses corresponding to the source code of the fetch object of the CPU is obtained based on the identifier of the program source code and the quantity of cache misses corresponding to the identifier. Then, the source code of the fetch object of the CPU is sorted in descending order based on the quantity of cache misses, to determine the source code that meets the condition A. The condition A includes: the quantity of cache misses of the source code is greater than the threshold A, an order number of the source code is less than a threshold E, and the source code includes the fetch object of the CPU.

It should be understood that a function may include source code related to the fetch object of the CPU, source code related to an arithmetic operation, source code related to a logical operation, source code related to determining and control, and the like. However, a cache miss event occurs only in the part of source code related to the fetch object. Therefore, to perform a data prefetch operation more accurately, after selecting the first function, the compilation optimization apparatus 100 further determines source code related to the fetch object of the CPU in the first function, to select source code that meets the condition A.

It should be noted that, during actual application, none of the plurality of functions in the program source code meets the condition C, or none of the source code in the first function meets the condition A in Manner (1). In this case, the compilation optimization apparatus 100 does not perform a compilation optimization operation of data prefetch on the program source code.

(2). The first configuration information is parsed to obtain the identifier of the program source code and a quantity of cache misses corresponding to the identifier, and then source code that is in the program source code and that is related to the fetch object of the CPU and the quantity of cache misses corresponding to the source code are determined.

The source code of the fetch object of the CPU is sorted in descending order based on the quantity of cache misses, to determine at least one piece of source code that meets the condition A. The condition A includes: the quantity of cache misses of the source code is greater than the threshold A, an order number of the source code is less than a threshold F, and the source code includes the fetch object of the CPU.

It should be noted that, during actual application, none of the source code in the program source code meets the condition A in Manner (2). In this case, the compilation optimization apparatus 100 does not perform a compilation optimization operation of data prefetch on the program source code.

In a specific embodiment, it is considered that a cache miss event is most likely to occur when the CPU executes a loop program, especially a program of an innermost loop nested in a loop. In this case, that the compilation optimization apparatus 100 calculates the prefetch distance of the source code that meets the condition A includes the following step: acquiring a CFG of a first loop, where the first loop is an innermost loop including the source code that meets the condition A, the CFG of the first loop represents all paths that the CPU traverses in a process of executing the first loop, the CFG of the first loop includes a plurality of BBs and a plurality of directed edges, and the plurality of directed edges are used for indicating an execution order of the plurality of BBs; then determines an execution probability of each directed edge, and calculates a single loop time value of the first loop based on the execution probability of each directed edge; and then, calculates, based on the single loop time value of the first loop, the prefetch distance of the source code that meets the condition A. For a specific process of this step, refer to the following S201 to S206.

Manner 2: The compilation optimization apparatus 100 performs a compilation operation of structure member rearrangement on the program source code based on the first configuration information.

In a specific embodiment, before performing a compilation operation of structure member rearrangement on the program source code, the compilation optimization apparatus 100 further performs the following steps: acquiring a plurality of structures and members in the plurality of structures in the program source code, and then recording a type of each structure in the plurality of structures, a variable of each structure, and a member in each structure.

In a specific embodiment, that the compilation optimization apparatus 100 performs the compilation operation of structure member rearrangement on the program source code based on the first configuration information includes: parsing the first configuration information, determining the identifier of the program source code and the quantity of cache misses corresponding to the identifier, and obtaining a quantity of cache misses of each structure based on the identifier of the program source code and the quantity of cache misses corresponding to the identifier, to determine the structure that meets the condition B, where the condition B includes: members in the structure do not have a sequential dependency in use, a quantity of cache misses of the structure is greater than a threshold B, and that the members in the structure do not have a sequential dependency in use means that the members in the structure are not obtained based on a structure pointer and an offset. Then, the order of the members in the structure that meets the condition B is adjusted to obtain a new structure, and finally the new structure is used to replace the structure that meets the condition B. For a specific process of this step, refer to the following S301 to S306.

It should be understood that the compilation optimization apparatus 100 may further perform a compilation operation of structure splitting, a compilation operation of function rearrangement, or the like on the program source code based on the first configuration information. A specific concept of the compilation optimization apparatus 100 is similar to the concepts of the foregoing manner 1 and manner 2. For brevity, details are not described in this application.

According to the foregoing method for compiling program source code, the second executable file may be obtained, and when a CPU executes the second executable file, an objective of optimizing a cache can be achieved. In addition, it can be learned from the foregoing description that, in the method, a quantity of cache misses corresponding to the program source code is determined by collecting the hardware cache event, and then the program source code is compiled with reference to the quantity of cache misses corresponding to the program source code, so that the second executable file obtained through compilation can notify more accurately and in a more timely manner the CPU of how to optimize a cache. Therefore, according to the method for compiling program source code provided in this application, accuracy and timeliness of cache optimization can be improved, and cache optimization costs can be reduced.

Refer to FIG. 4. The following further describes a process in which the compilation optimization apparatus 100 calculates the prefetch distance of the source code that meets the condition A in S104.

In this embodiment of this application, considering that the at least one first function is a function in which a large quantity of cache miss events occur in the program source code, the source code that meets the condition A is most likely to be source code in an innermost loop of the at least one first function. In other words, the first loop is most likely to be an innermost loop of the at least one first function. Therefore, the compilation optimization apparatus 100 performs S201 to S203 to acquire the first loop. For brevity, one first function is used as an example for description herein.

S201: Acquire at least one innermost loop in a first function.

It should be understood that, in an actual case, the first function may include a plurality of innermost loops, and some innermost loops have high iterative execution probabilities, and some innermost loops have low iterative execution probabilities. Compared with an innermost loop with a low iterative execution probability, the source code that meets the condition A is more likely to be a part of an innermost loop with a high iterative execution probability. Therefore, the compilation optimization apparatus 100 may further perform S202. It should be noted herein that the iterative execution probability of the innermost loop is a probability of iterative running in the loop, rather than a probability of executing the loop in a function.

S202: Determine an innermost loop that is in the at least one innermost loop and that meets a condition D, to obtain a first loop and a CFG of the first loop.

The condition D includes at least one of the following: an iterative execution probability of a loop is greater than a threshold G, and a non-iterative execution probability of a loop is less than a threshold H.

In a specific embodiment, the compilation optimization apparatus 100 may calculate an execution probability or a skipping probability of each innermost loop in the first function in the following manner. An innermost loop in the first function is used as an example for description.

First, a CFG of the loop is constructed. The CFG of the loop indicates all paths traversed by the CPU in a process of executing the loop. The CFG of the loop includes a plurality of BBs and a plurality of directed edges, each directed edge indicates an execution order of two BBs in the loop, and each BB includes at least one instruction. It should be noted that the instruction in the BB is source code. Then, the BBs are traversed, and the BBs, a quantity of execution time values of the BBs, and an execution probability of each directed edge are recorded. Then, for an execution probability of the loop and a skipping probability of the loop may be calculated with reference to the following formulas:

$$ y1 = \frac{sum(exit\_edge\_prob * exit\_BB\_count)}{header\_BB\_count} $$

$$ y2 = 1 - y1 $$

y1 represents a skipping probability of the loop. exit_edge_prob represents a probability of exiting a directed edge of the loop. exit_BB_count represents a quantity of execution time values of BBs that lead out the directed edge. header_BB_count represents a quantity of execution time values of entry BBs of the loop. y2 represents an execution probability of the loop. exit_edge_prob, exit_BB_count, and header_BB_count may be obtained through calculation by the compilation optimization apparatus 100 by using a method such as a static analysis function provided by a compiler, an FDO, or an AutoFDO. For brevity, exit_edge_prob, exit_BB_count, and header_BB_count are not described in this application.

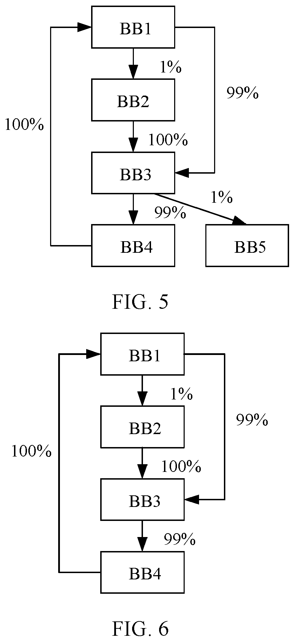

For example, it is assumed that the first function includes a loop 1, the threshold G in the condition D is 0.9, and the threshold H is 0.2. FIG. 5 shows a CFG of the loop 1. Execution time values of BB1, BB2, BB3, BB4, and BB5 are 100, 99, 100, 99, and 1 respectively. Execution probabilities of a directed edge BB1→BB2, a directed edge BB1→BB3, a directed edge BB2→BB3, a directed edge BB3→BB4, a directed edge BB3→BB5, and a directed edge BB4→BB1 are 99%, 1%, 100%, 99%, 1%, 100%, respectively. BB1 is an entry BB of the loop 1, and the directed edge BB3→BB5 is a directed edge that exits the loop 1. Therefore, y1 = (1% * 100)/100 = 0.01 and y2 = 1 - 0.01 = 0.99 may be obtained through calculation according to the foregoing formula. That is, a probability of not executing the loop 1 is 0.01, a probability of executing the loop 1 is 0.99, and the foregoing condition D is met, and the loop 1 in the first function is a first loop.

S203: Determine a BB unrelated to the loop layer of the first loop and a directed edge unrelated to the loop layer of the first loop, and prune the unrelated BB and the unrelated directed edge to obtain a second loop.

Specifically, the compilation optimization apparatus 100 traverses all BBs in the first loop, determines a BB and a directed edge that are unrelated to the first loop, and prunes the unrelated BB and directed edge to obtain the second loop. The BB unrelated to the loop layer of the first loop may be a BB pointed to by a directed edge that exits the first loop, and the directed edge unrelated to the loop layer of the first loop may be a directed edge that exits the first loop. The loop 1 shown in FIG. 5 is used as an example. BB5 is a BB unrelated to a loop layer of the loop 1, and a directed edge BB3→BB5 is a directed edge unrelated to the loop layer of the loop 1. A loop shown in FIG. 6 may be obtained after the BB5 and the directed edge BB3→BB5 are pruned.

S204: Calculate an execution probability of each BB in the second loop.

Specifically, when performing S202, the compilation optimization apparatus 100 constructs a CFG of each innermost loop in the first function, and records a BB included in the CFG and an execution probability of a directed edge. Therefore, the compilation optimization apparatus 100 may obtain each BB included in the CFG of the first loop and an execution probability of each directed edge, and then obtain an execution probability of each BB in the second loop through calculation based on the execution probability of each directed edge included in the CFG of the first loop.

In a possible implementation, for ease of calculation, it may be assumed that an execution probability of the entry BB in the second loop is 100%, and then an execution probability of each BB in the second loop is calculated based on an execution probability of each directed edge included in the CFG in the first loop. The loop shown in FIG. 6 is used as an example. It is assumed that an execution probability of a BB1 is 100%. Because execution probabilities of a directed edge BB1→BB2, a directed edge BB1→BB3, a directed edge BB2→BB3, a directed edge BB3→BB4, and a directed edge BB4→BB1 are 99%, 1%, 100%, 99%, and 100%, respectively. Therefore, an execution probability of BB2 is 99%, and an execution probability of BB3 is 100% (1%+99%), and an execution probability of BB4 is 99%.

It should be noted herein that, for a loop with a high execution probability, after an exit branch (that is, a BB unrelated to a loop layer of the loop) of the loop is pruned, an execution probability of each BB in an independent loop body can still be accurately reflected. For a loop with a low execution probability, after the exit branch of the loop is pruned, because the execution probability of the exit branch is high, and the execution probability of the BB in the loop layer is low, the execution probability of each BB in the pruned loop cannot represent the execution probability of the BB in the entire loop. That is, the compilation optimization apparatus 100 can further improve accuracy of data prefetch by performing S102.

It should be further noted that, in this embodiment of this application, a more appropriate execution time value of a single loop may be calculated by calculating an execution probability of a loop branch (that is, an execution probability of a directed edge). For example, it is assumed that BB2 in FIG. 6 may include a large quantity of instructions. Therefore, time consumed for executing BB2 is long. If an execution time value of BB2 is not calculated based on an execution probability of the directed edge BB1→BB2, a calculated execution time value of a single loop is long. However, during actual application, a probability of executing BB2 by the CPU is very low (1%). That is, in most cases, loop execution directly jumps from BB1 to BB3, and in this way, the calculated execution time value of a single loop is greatly shortened. Therefore, when the execution time value of a single loop is calculated, a more appropriate value is calculated based on the execution probability of the loop branch.

S205: Calculate a single loop time value of the second loop based on the execution probability of each BB in the second loop and a quantity and types of instructions in each BB, that is, a single loop time value of a loop layer of the first loop (referred to as a single loop time value of the first loop below).

Specifically, a quantity and types of all instructions in each BB of the second loop are acquired. Because instructions of a same type have a same execution time value, for calculation of a single loop time value of the second loop, refer to the following formula:

$$loop\_time = sum\big(BB\_prob * sum(inst\_time)\big)$$

loop_time represents a single loop time value of the second loop. BB_prob represents an execution probability of the BEING. inst_time represents an execution time value of an instruction in the BEING. sum(inst_time) represents a sum of execution time value of all instructions in the BB.

S206: Calculate, based on the single loop time value of the first loop and a latency time value of accessing the memory by the CPU, a prefetch distance of the source code that is in the first loop and that meets the condition A.

Specifically, the compilation optimization apparatus 100 obtains the latency time value of accessing the memory by the CPU, determines first source code that exists in the second loop, and then calculates a prefetch distance of the first source code in the second loop based on the single loop time value of the second loop and the latency time value of accessing the memory by the CPU.

In a specific embodiment, for calculation of the prefetch distance of the source code that meets the condition A in the first loop, refer to the following formula:

$$prefetch\_dis = latency/loop\_time$$

prefetch_dis represents the prefetch distance of the source code that is in the first loop and that meets the condition A, latency represents the latency time value of accessing the memory by the CPU, and loop_time represents the single loop time value of the second loop.

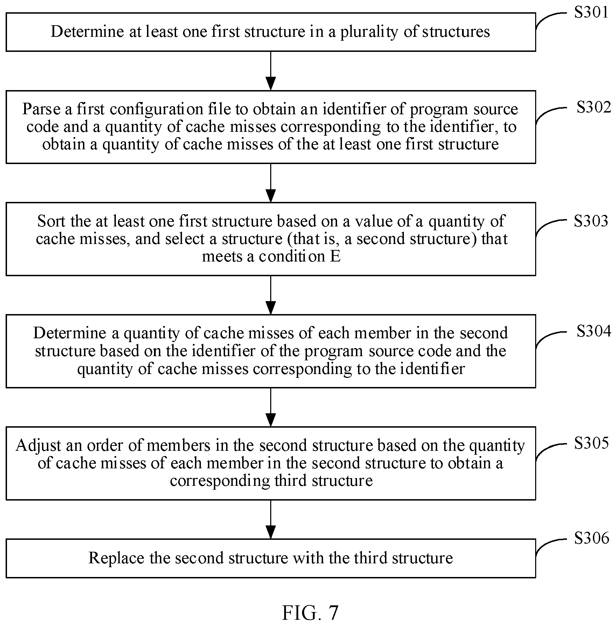

The following further describes a process in which the compilation optimization apparatus 100 performs the compilation operation of structure member rearrangement on the program source code based on the first configuration information in S104 with reference to FIG. 7.

S301: Determine at least one first structure in the foregoing plurality of structures. Members in the first structure do not have sequential dependency in use.

Specifically, it is detected whether the members in each of the foregoing structures have sequential dependency in use. If any member in the structure has sequential dependency in use, the compilation optimization apparatus 100 does not perform a structure member rearrangement operation on the structure. If the members in the structure do not have sequential dependency (that is, the first structure) in use, the compilation optimization apparatus 100 performs the following S302 to S306.

S302: Parse a first configuration file to obtain an identifier of program source code and a quantity of cache misses corresponding to the identifier, to obtain a quantity of cache misses of the at least one first structure.

S303: Sort the at least one first structure based on a value of a quantity of cache misses, and select a structure (referred to as a second structure for short below) that meets a condition E.

If the at least one first structure is sorted in descending order based on the quantity of cache misses, the condition E includes at least one of the following: a quantity of cache misses of the structure is greater than a threshold I, and an order number of the structure is less than a threshold J. If the at least one first structure is sorted in ascending order based on the quantity of cache misses, the condition E includes at least one of the following: a quantity of cache misses of the structure is greater than the threshold I, and an order number of the structure is greater than a threshold K. It should be understood that, the condition B includes: the condition E and that the members in the structure do not have sequential dependency in use.

S304: Determine a quantity of cache misses of each member in the second structure based on the identifier of the program source code and the quantity of cache misses corresponding to the identifier.

S305: Adjust an order of members in the second structure based on the quantity of cache misses of each member in the second structure to obtain a corresponding third structure.

In a specific embodiment, the adjusting, by the compilation optimization apparatus 100, an order of the members in the second structure based on the quantity of cache misses of the members in the second structure, to obtain a corresponding third structure includes the following step: placing, based on the quantity of cache misses of the members in the second structure, a member with a large quantity of cache misses in the structure into a same cache line, to improve cache utilization.

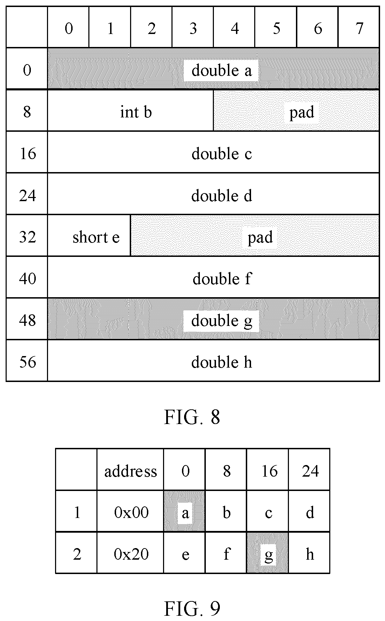

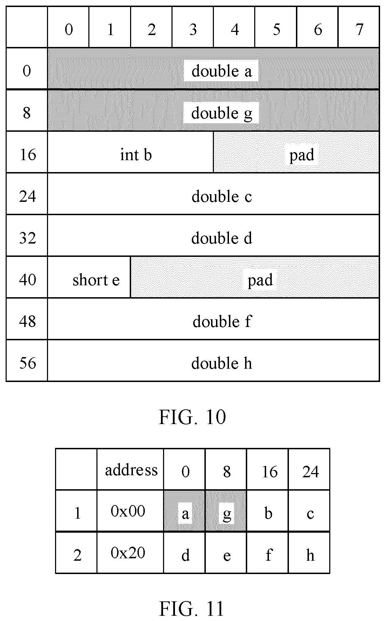

For example, as shown in FIG. 8, the second structure includes eight members, which are a member a, a member b, a member c, a member d, a member e, a member f, a member g, and a member h, and these members do not have sequential dependency in use. FIG. 9 is a schematic diagram of storage arrangement of a second structure. As shown in FIG. 9, the second structure is stored in a cache as two cache lines. It is assumed that when executing a program, the CPU only needs to read the member a and the member g from the cache. In this case, the CPU needs to read two cache lines from the cache to obtain the member a and the member g. However, if the method provided in the foregoing embodiment is performed, that is, an order of the members in the second structure is adjusted based on a value of a quantity of cache misses (members whose quantity of cache misses is in descending order are sequentially the member a, the member g, the member b, the member c, the member d, the member e, the member f, and the member h), a schematic diagram of a storage arrangement of the third structure shown in FIG. 10 and a schematic diagram of a storage arrangement of the third structure shown in FIG. 11 may be obtained. In this case, the CPU only needs to read one cache line from the cache to obtain the member a and the member g. Therefore, compared with the second structure shown in FIG. 8, when the third structure shown in FIG. 10 is stored in the cache, cache utilization can be improved.

Further, the compilation optimization apparatus 100 may further acquire a size of each member in the second structure, and adjust the order of the members in the second structure based on the quantity of cache misses of the members in the second structure and the size of each member in the second structure, to obtain a corresponding third structure. Specifically, when the quantities of cache misses of the members in the second structure are close, the order of the members may be adjusted based on sizes of the members to obtain the corresponding third structure.

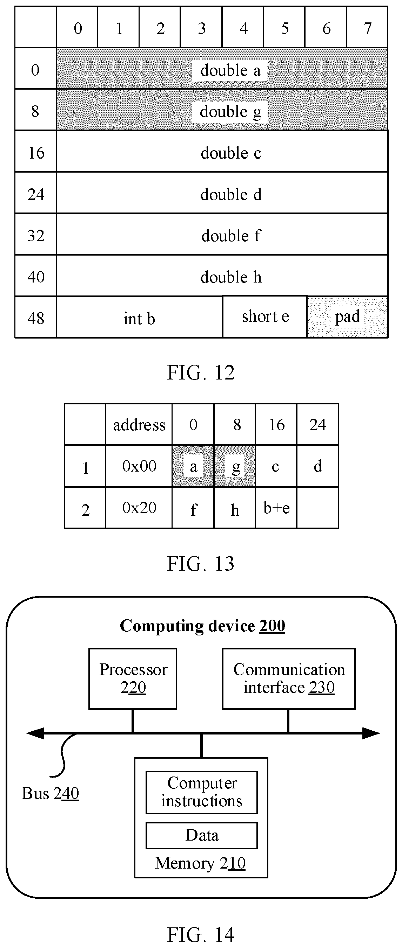

For example, the second structure shown in FIG. 8 is still used as an example. It is assumed that the quantities of cache misses of the member b, the member c, the member d, the member e, the member f, and the member h in the second structure are close, and compared with other members in the second structure, the member b and the member e occupy smaller memory space. Therefore, based on the third structure shown in FIG. 10, further, an order of the member b, the member c, the member d, the member e, the member f, and the member h is adjusted, to obtain schematic diagrams of storage arrangements of another third structure shown in FIG. 12 and another third structure shown in FIG. 13. It can be learned that sizes of the structures shown in FIG. 8 and FIG. 10 are both 64 bytes, but a size of the structure shown in FIG. 12 is only 56 bytes. Therefore, compared with the structures shown in FIG. 8 and FIG. 10, the structure shown in FIG. 12 occupies smaller storage space. In other words, cache utilization can be improved by using the foregoing method.

S306: Replace the second structure with the third structure.

This application further provides a compilation optimization apparatus. The compilation optimization apparatus is configured to perform or implement the foregoing compilation optimization method for program source code. A function of the compilation optimization apparatus may be implemented by a software system, or may be implemented by a hardware device, or may be implemented by a combination of the software system and the hardware device.

As shown in FIG. 2 above, a compilation optimization apparatus provided in this application may include a running unit 110, an event collection unit 120, a parsing unit 130, and a compilation unit 140. The running unit 110 is configured to perform the steps related to running of the first executable file in S101 and S102. The event collection unit 120 is configured to perform the step of collecting a hardware cache event in S102. The parsing unit 130 is configured to perform S103. The compilation unit 140 is configured to perform S104, S201 to S206, and S301 to S306. For simplicity, details are not described herein again.

This application further provides a computing device. The computing device is configured to perform the foregoing compilation optimization method for program source code. When the foregoing compilation optimization apparatus 100 is a software system, the foregoing compilation optimization apparatus 100 may be further deployed on the computing device, to implement a function of the foregoing compilation optimization apparatus 100.

FIG. 14 is a schematic diagram of a structure of a computing device according to this application. A computing device 200 includes a memory 210, a processor 220, a communication interface 230, and a bus 240. The memory 210, the processor 220, and the communication interface 230 implement mutual communication connection through the bus 240.

The memory 210 may be a read-only memory (read-only memory, ROM), a static storage device, a dynamic storage device, or a random access memory (random access memory, RAM). The memory 210 may store computer instructions, for example, computer instructions in the running unit 110, computer instructions in the event collection unit 120, computer instructions in the parsing unit 130, or computer instructions in the compilation unit 140. When the computer instructions stored in the memory 210 are executed by the processor 220, the processor 220 and the communication interface 230 are configured to perform some or all of the methods described in steps S101 to S104, S201 to 206, and S301 to S306. The memory 210 may further store data, for example, store intermediate data or result data generated by the processor 220 in an execution process, for example, debugging information, a prefetch distance, a structure member, and a second executable file.

The processor 220 may be a CPU, a microprocessor, an application-specific integrated circuit (application-specific integrated circuit, ASIC), a graphics processing unit (graphics processing unit, GPU), or one or more integrated circuits.

The processor 220 may be an integrated circuit chip and has a signal processing capability. In an implementation process, some or all functions of the compilation optimization apparatus 100 may be implemented by using an integrated logic circuit of hardware in the processor 220 or instructions in a form of software. Alternatively, the processor 220 may be a general-purpose processor, a data signal processor (digital signal processor, DSP), a field programmable logic gate array (field programmable gate array, FPGA), or another programmable logic device, a discrete gate or a transistor logic device, or a discrete hardware component, to implement or perform the methods, steps, and logical block diagrams disclosed in embodiments of this application. The general-purpose processor may be a microprocessor or the processor may be any conventional processor, or the like, and the steps of the method disclosed in conjunction with embodiments of this application may be directly embodied as being performed by a hardware decoding processor or performed with a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 210. The processor 220 reads information in the memory 210, and completes some or all functions of the compilation optimization apparatus 100 in combination with hardware of the processor 220.

The communication interface 230 uses a method module, for example, but not limited to, a transceiver, to implement communication between the computing device 200 and another device or a communication network. For example, the first executable file and the program source code may be acquired through the communication interface 230, or the compiled second executable file may be sent to another device through the communication interface 230.

The bus 240 may include a path for transmitting information between components (for example, the memory 210, the processor 220, and the communication interface 230) in the computing device 200.

The descriptions of the procedures corresponding to the foregoing accompanying drawings have respective focuses. For a part that is not described in detail in a procedure, refer to related descriptions of another procedure.

All or some of the foregoing embodiments may be implemented using software, hardware, or a combination thereof. When software is used to implement the embodiments, all or a part of the embodiments may be implemented in a form of a computer program product. The computer program product that provides the compilation optimization apparatus includes one or more computing instructions executed by the compilation optimization apparatus. When these computer program instructions are loaded and executed on a computer, all or some of the procedures or functions according to the figures in embodiments of this application are generated.

The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium stores computer program instructions that provide a compilation optimization apparatus. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, an optical disc), or a semiconductor medium (for example, a solid-state drive (solid-state drive, SSD)).

**Claims**

1. A compilation optimization method for program source code, comprising:

running a first executable file, and collecting a hardware cache event, wherein the first executable file comprises an executable program and debugging information, the executable program is obtained by compiling program source code, and the debugging information comprises a correspondence between the program source code and an executable instruction in the executable program;
obtaining first configuration information based on the hardware cache event and the debugging information, wherein the first configuration information comprises an identifier of the program source code and a quantity of cache misses corresponding to the identifier; and
compiling the program source code based on the first configuration information to obtain a second executable file.

2. The method according to claim 1, wherein the obtaining first configuration information based on the hardware cache event and the debugging information comprises:

parsing the hardware cache event to obtain a quantity of cache misses corresponding to the executable instruction; and
determining, based on the quantity of cache misses corresponding to the executable instruction and the debugging information, a quantity of cache misses corresponding to source code associated with the executable instruction to obtain the first configuration information.

3. The method according to claim 1 or 2, wherein the compiling the program source code based on the first configuration information to obtain a second executable file comprises:

parsing the first configuration information, and determining source code that is in the program source code and that meets a first condition, wherein the first condition comprises: a quantity of cache misses of the source code is greater than a first threshold, and the source code comprises a fetch object;
calculating a prefetch distance of the source code that meets the first condition, wherein the prefetch distance indicates an advance of moving the fetch object from memory to a cache; and
generating a prefetch instruction based on the prefetch distance.

4. The method according to claim 3, wherein the calculating a prefetch distance of the source code that meets the first condition comprises:

acquiring a control flow graph CFG of a first loop, wherein the first loop is an innermost loop comprising the source code that meets the first condition, the CFG of the first loop comprises a plurality of basic blocks BBs and a plurality of directed edges, and the plurality of directed edges are used for indicating an execution order of the plurality of BBs;
determining an execution probability of each directed edge;
calculating a single loop time value of the first loop based on the execution probability of each directed edge; and
calculating, based on the single loop time value of the first loop, the prefetch distance of the source code that meets the first condition.

5. The method according to claim 4, wherein the acquiring a CFG of a first loop comprises:

parsing the first configuration information, and determining a function that is in the program source code and that meets a second condition, wherein the second condition is that a quantity of cache misses of the function is greater than a second threshold, and the quantity of cache misses of the function is a sum of quantities of cache misses of source code comprised in the function;
determining a first loop in the function that meets the second condition, wherein the first loop is an innermost loop in the function that meets the second condition, and an iterative execution probability of the first loop is greater than a third threshold; and
constructing the CFG of the first loop.

6. The method according to claim 3 or 4, wherein the calculating a single loop time value of the first loop based on the execution probability of each directed edge comprises:

determining a BB and a directed edge that are unrelated to a loop layer of the first loop;
pruning the unrelated BB and directed edge to obtain a second loop; and
calculating execution probabilities of BBs in the second loop based on the execution probability of each directed edge to obtain the single loop time value of the first loop, wherein the single loop time value of the first loop is a sum of products of the execution probabilities of the BBs and execution time values of the BBs.

7. The method according to any one of claims 1 to 5, wherein before the compiling the program source code based on the first configuration information to obtain a second executable file, the method further comprises:

acquiring a plurality of structures and members in the plurality of structures in the program source code; and
the compiling the program source code based on the first configuration information to obtain a second executable file comprises:

parsing the first configuration information, and determining a structure in the plurality of structures that meets a third condition, wherein the third condition comprises: members in the structure do not have sequential dependency in use, and a quantity of cache misses of the structure is greater than a fourth threshold; adjusting an order of the members in the structure that meets the third condition to obtain a new structure; and replacing the structure that meets the third condition with the new structure.

8. The method according to claim 7, wherein each structure comprises source code in the program source code, and the parsing the first configuration information, and determining a structure that meets a third condition comprises:

parsing the first configuration information, and determining the identifier of the program source code and the quantity of cache misses corresponding to the identifier; and
obtaining a quantity of cache misses of each structure based on the identifier of the program source code and the quantity of cache misses corresponding to the identifier to determine the structure that meets the third condition.

9. The method according to claim 7 or 8, wherein the adjusting an order of the members in the structure that meets the third condition comprises:

acquiring quantities of cache misses of a plurality of members in the structure that meets the third condition; and
adjusting an order of the plurality of members based on the quantities of cache misses of the plurality of members.

10. The method according to claim 9, wherein the adjusting an order of the plurality of members based on the quantities of cache misses of the plurality of members comprises:

acquiring a size of each member in the plurality of members; and
adjusting the order of the plurality of members based on the size of each member and the quantity of cache misses of each member.

11. A compilation optimization apparatus for program source code, wherein the apparatus comprises:

a running unit, configured to run a first executable file, wherein the first executable file comprises an executable program and debugging information, the executable program is obtained by compiling program source code, and the debugging information comprises a correspondence between the program source code and an executable instruction in the executable program;
an event collection unit, configured to collect a hardware cache event;
a parsing unit, configured to obtain first configuration information based on the hardware cache event and the debugging information, wherein the first configuration information comprises an identifier of the program source code and a quantity of cache misses corresponding to the identifier; and
a compilation unit, configured to compile the program source code based on the first configuration information to obtain a second executable file.

**12.** The apparatus according to claim 11, wherein the parsing unit is further configured to:

parse the hardware cache event to obtain a quantity of cache misses corresponding to the executable instruction; and
determine, based on the quantity of cache misses corresponding to the executable instruction and the debugging information, a quantity of cache misses corresponding to source code associated with the executable instruction to obtain the first configuration information.

**13.** The apparatus according to claim 11 or 12, wherein the compilation unit is further configured to:

parse the first configuration information, and determine source code that is in the program source code and that meets a first condition, wherein the first condition comprises: a quantity of cache misses of the source code is greater than a first threshold, and the source code comprises a fetch object;
calculate a prefetch distance of the source code that meets the first condition, wherein the prefetch distance indicates an advance of moving the fetch object from memory to a cache; and
generate a prefetch instruction based on the prefetch distance.

**14.** The apparatus according to claim 13, wherein the compilation unit is further configured to:

acquire a control flow graph CFG of a first loop, wherein the first loop is an innermost loop comprising the source code that meets the first condition, the CFG of the first loop comprises a plurality of basic blocks BBs and a plurality of directed edges, and the plurality of directed edges are used for indicating an execution order of the plurality of BBs;
determine an execution probability of each of the plurality of directed edges;
calculate a single loop time value of the first loop based on the execution probability of each directed edge; and
calculate, based on the single loop time value of the first loop, the prefetch distance of the source code that meets the first condition.

**15.** The apparatus according to claim 14, wherein the compilation unit is further configured to:

parse the first configuration information, and determine a function that is in the program source code and that meets a second condition, wherein the second condition is that a quantity of cache misses of the function is greater than a second threshold, and the quantity of cache misses of the function is a sum of quantities of cache misses of source code comprised in the function;
determine a first loop in the function that meets the second condition, wherein the first loop is an innermost loop in the function that meets the second condition, and an iterative execution probability of the first loop is greater than a third threshold; and
construct the CFG of the first loop.

**16.** The apparatus according to claim 13 or 14, wherein the compilation unit is further configured to:

determine a BB and a directed edge that are unrelated to a loop layer of the first loop;
prune the unrelated BB and directed edge to obtain a second loop; and
calculate execution probabilities of BBs in the second loop based on the execution probability of each directed edge to obtain the single loop time value of the first loop, wherein the single loop time value of the first loop is a sum of products of the execution probabilities of the BBs and execution time values of the BBs.

**17.** The apparatus according to any one of claims 11 to 15, wherein the compilation unit is further configured to:

acquire a plurality of structures and members in the plurality of structures in the program source code; and
the compilation unit is further configured to:

parse the first configuration information, and determine a structure in the plurality of structures that meets a third condition, wherein the third condition comprises: members in the structure do not have sequential dependency in use, and a quantity of cache misses of the structure is greater than a fourth threshold;
adjust an order of the members in the structure that meets the third condition to obtain a new structure; and

replace the structure that meets the third condition with the new structure.

18. The apparatus according to claim 17, wherein each structure comprises source code in the program source code, and the compilation unit is further configured to:

parse the first configuration information, and determine the quantity of cache misses corresponding to source code associated with the executable instruction; and
obtain a quantity of cache misses of each structure based on the quantity of cache misses corresponding to source code associated with the executable instruction to determine the structure that meets the third condition.

19. The apparatus according to claim 17 or 18, wherein the compilation unit is further configured to:

acquire quantities of cache misses of a plurality of members in the structure that meets the third condition; and
adjust an order of the plurality of members based on the quantities of cache misses of the plurality of members.

20. The apparatus according to claim 19, wherein the compilation unit is further configured to:

acquire a size of each member in the plurality of members; and
adjust the order of the plurality of members based on the size of each member and the quantity of cache misses of each member.

21. A computing device, wherein the computing device comprises a processor and a memory, the memory stores computer instructions, and the processor executes the computer instructions, to enable the computing device to perform the method according to any one of claims 1 to 10.

22. A computer-readable storage medium, wherein the computer-readable storage medium stores computer instructions, and when the computer instructions are executed by a computing device, the computing device performs the method according to any one of claims 1 to 10.

FIG. 1

FIG. 2

Acquire a first executable file ⎤ S101

Run the first executable file, and collect a hardware cache event ⎤ S102

Obtain first configuration information based on the hardware cache event and debugging information ⎤ S103

Compile program source code based on the first configuration information to obtain a second executable file ⎤ S104

FIG. 3

Acquire at least one innermost loop in a first function ⎤ S201

Determine an innermost loop (that is, a first loop) that is in the at least one innermost loop and that meets a condition D ⎤ S202

Determine a BB and a directed edge that are unrelated to a loop layer of the first loop, and prune the unrelated BB and directed edge to obtain a second loop ⎤ S203

Calculate an execution probability of each BB in the second loop ⎤ S204

Calculate a single loop time value of the second loop based on the execution probability of each BB in the second loop and a quantity and types of instructions in each BB ⎤ S205

Calculate, based on the single loop time value of the second loop and a latency time value of accessing memory by a CPU, a prefetch distance of source code that is in the first loop and that meets a condition A ⎤ S206

FIG. 4

FIG. 5

FIG. 6

Determine at least one first structure in a plurality of structures — S301

Parse a first configuration file to obtain an identifier of program source code and a quantity of cache misses corresponding to the identifier, to obtain a quantity of cache misses of the at least one first structure — S302

Sort the at least one first structure based on a value of a quantity of cache misses, and select a structure (that is, a second structure) that meets a condition E — S303

Determine a quantity of cache misses of each member in the second structure based on the identifier of the program source code and the quantity of cache misses corresponding to the identifier — S304

Adjust an order of members in the second structure based on the quantity of cache misses of each member in the second structure to obtain a corresponding third structure — S305

Replace the second structure with the third structure — S306

FIG. 7

|   | 0 | 1 | 2 | 3 | 4 | 5 | 6 | 7 |
|---|---|---|---|---|---|---|---|---|
| 0 | double a ||||||||
| 8 | int b |||| pad ||||
| 16 | double c ||||||||
| 24 | double d ||||||||
| 32 | short e || pad ||||||
| 40 | double f ||||||||
| 48 | double g ||||||||
| 56 | double h ||||||||

FIG. 8

|   | address | 0 | 8 | 16 | 24 |
|---|---------|---|---|----|----|
| 1 | 0x00 | a | b | c | d |
| 2 | 0x20 | e | f | g | h |

FIG. 9

|    | 0 | 1 | 2 | 3 | 4 | 5 | 6 | 7 |
|----|---|---|---|---|---|---|---|---|
| 0  | double a |||||||
| 8  | double g |||||||
| 16 | int b |||| pad ||||
| 24 | double c |||||||
| 32 | double d |||||||
| 40 | short e || pad ||||||
| 48 | double f |||||||
| 56 | double h |||||||

FIG. 10

|   | address | 0 | 8 | 16 | 24 |
|---|---------|---|---|----|----|
| 1 | 0x00 | a | g | b | c |
| 2 | 0x20 | d | e | f | h |

FIG. 11

| | 0 | 1 | 2 | 3 | 4 | 5 | 6 | 7 |
|---|---|---|---|---|---|---|---|---|
| 0 | double a | | | | | | | |
| 8 | double g | | | | | | | |
| 16 | double c | | | | | | | |
| 24 | double d | | | | | | | |
| 32 | double f | | | | | | | |
| 40 | double h | | | | | | | |
| 48 | int b | | | | short e | | pad | |

FIG. 12

| | address | 0 | 8 | 16 | 24 |
|---|---|---|---|---|---|
| 1 | 0x00 | a | g | c | d |
| 2 | 0x20 | f | h | b+e | |

FIG. 13

**Computing device 200**

Processor 220

Communication interface 230

Bus 240

Computer instructions

Data

Memory 210

FIG. 14

# EP 4 369 207 A1

| | INTERNATIONAL SEARCH REPORT | International application No. |
|---|---|---|
| | | **PCT/CN2022/107678** |

**A. CLASSIFICATION OF SUBJECT MATTER**

G06F 12/08(2016.01)i

According to International Patent Classification (IPC) or to both national classification and IPC

**B. FIELDS SEARCHED**

Minimum documentation searched (classification system followed by classification symbols)

G06F 12/-, G06F 9/-

Documentation searched other than minimum documentation to the extent that such documents are included in the fields searched

Electronic data base consulted during the international search (name of data base and, where practicable, search terms used)

WPABSC; CNTXT; ENTXT; WPABS; CJFD; DWPI; ENTXTC; VEN; CNKI: 预取, 缓存, 未命中, 缺失, 可执行, 编译, 排序, 重排, 优化, prefetch+, cache, miss, cache-miss, executable, compil+, order+, reorder+, optimi+

**C. DOCUMENTS CONSIDERED TO BE RELEVANT**

| Category* | Citation of document, with indication, where appropriate, of the relevant passages | Relevant to claim No. |
|---|---|---|
| X | CN 112352219 A (HUAWEI TECHNOLOGIES CO., LTD.) 09 February 2021 (2021-02-09) description, paragraphs 55-120, and claims 1-33 | 1-3, 11-13, 21-22 |
| X | US 5933643 A (HEWLETT PACKARD COMPANY) 03 August 1999 (1999-08-03) description, columns 1-4, and claims 1-26 | 1-3, 11-13, 21-22 |
| X | EP 0883059 A2 (NEC CORP.) 09 December 1998 (1998-12-09) description, columns 1-12, and claims 1-9 | 1-3, 11-13, 21-22 |
| A | US 2003225996 A1 (HEWLETT PACKARD COMPANY) 04 December 2003 (2003-12-04) entire document | 1-22 |
| A | US 2004205307 A1 (BROADCOM CORP.) 14 October 2004 (2004-10-14) entire document | 1-22 |
| A | CN 108073525 A (HUAWEI TECHNOLOGIES CO., LTD.) 25 May 2018 (2018-05-25) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2022** | **10 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107678**

| Patent document cited in search report | | | Publication date (day/month/year) | Patent family member(s) | | | Publication date (day/month/year) |
|---|---|---|---|---|---|---|---|
| CN | 112352219 | A | 09 February 2021 | WO | 2019241921 | A1 | 26 December 2019 |
| | | | | US | 2020293295 | A1 | 17 September 2020 |
| | | | | US | 11221834 | B2 | 11 January 2022 |
| US | 5933643 | A | 03 August 1999 | None | | | |
| EP | 0883059 | A2 | 09 December 1998 | JP | H10333916 | A | 18 December 1998 |
| | | | | JP | 3156761 | B2 | 16 April 2001 |
| US | 2003225996 | A1 | 04 December 2003 | US | 6951015 | B2 | 27 September 2005 |
| US | 2004205307 | A1 | 14 October 2004 | US | 2007083720 | A1 | 12 April 2007 |
| | | | | EP | 1475705 | A2 | 10 November 2004 |
| | | | | EP | 1475705 | A3 | 22 August 2007 |
| | | | | US | 7124276 | B2 | 17 October 2006 |
| CN | 108073525 | A | 25 May 2018 | KR | 20190070981 | A | 21 June 2019 |
| | | | | RU | 2019117778 | A | 10 December 2020 |
| | | | | EP | 3534266 | A1 | 04 September 2019 |
| | | | | US | 2019266094 | A1 | 29 August 2019 |
| | | | | CA | 3043127 | A1 | 17 May 2018 |
| | | | | WO | 2018086494 | A1 | 17 May 2018 |
| | | | | JP | 2020500368 | A | 09 January 2020 |
| | | | | EP | 3534266 | A4 | 30 October 2022 |
| | | | | JP | 6830534 | B2 | 17 February 2021 |
| | | | | CN | 108073525 | B | 19 October 2021 |
| | | | | KR | 102353213 | B1 | 18 January 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110876986